# EUROPEAN PATENT SPECIFICATION

(11) **EP 4 238 353 B1**
(45) Date of publication and mention of the grant of the patent: **06.05.2026**
(21) Application number: 21806039.0
(22) Date of filing: 29.10.2021
(51) Int. Cl.: H04W 36/00

(54) **HANDOVER COMMAND IN NON-TERRESTRIAL NETWORKS**
ÜBERGABEBEFEHL IN NICHT TERRESTRISCHEN NETZWERKEN
COMMANDE DE TRANSFERT DANS DES RÉSEAUX NON TERRESTRES

(30) Priority: 30.10.2020 US 202063108124 P
(43) Date of publication of application: 06.09.2023
(60) Divisional application: 26169869.0
(73) Proprietor: Telefonaktiebolaget LM Ericsson (publ), 164 83 Stockholm (SE)
(72) Inventor: YAVUZ, Emre, 112 52 Stockholm (SE); RUNE, Johan, 181 29 Lidingö (SE); MÄÄTTANEN, Helka-Liina, 00510 Helsinki (FI); LIBERG, Olof, 122 37 Enskede (SE); HE, Chao, 192 51 Solna (SE); KHAN, Talha, Santa Clara, California 95054 (US); PERSSON, Claes-Göran, 595 95 Mjölby (SE)
(74) Representative: Ericsson
(86) International application number: PCT/IB2021/060056
(87) International publication number: WO 2022/091037

(56) References cited:
- EP-A1- 3 927 020
- WO-A1-2020/092561
- WO-A1-2020/124386
- WO-A1-2020/164018
- US-A1- 2020 314 711
- ERICSSON: "Fallback to source cell during DAPS handover", vol. RAN WG2, no. Reno, USA; 20191118 - 20191122, 7 November 2019 (2019-11-07), XP051815684, Retrieved from the Internet <URL:https://ftp.3gpp.org/tsg_ran/WG2_RL2/TSGR2_108/Docs/R2-1914623.zip R2-1914623 - Fallback to source cell during DAPS HO.docx> [retrieved on 20191107]

## Description

### TECHNICAL FIELD

The present disclosure relates, in general, to wireless communications and, more particularly, systems and methods for enhancing handover command and the execution thereof in Non-Terrestrial Networks (NTNs).

### BACKGROUND

Third Generation Partnership Project (3GPP) Release 8 specifies the Evolved Packet System (EPS). EPS is based on the Long-Term Evolution (LTE) radio network and the Evolved Packet Core (EPC). It was originally intended to provide voice and mobile broadband (MBB) services, but it has continuously evolved to broaden its functionality. Since Release 13, Narrowband Internet-of-Things (NB-IoT) and LTE for machines (LTE-M) are part of the LTE specifications and provide connectivity to massive machine type communications (mMTC) services.

3GPP Release 15 specifies the first release of the 5G system (5GS). This new generation radio access technology intended to serve use cases such as enhanced mobile broadband (eMBB), ultra-reliable and low latency communication (URLLC), and mMTC. The 5G specification includes the New Radio (NR) access stratum interface and the 5G Core Network (5GC). The NR physical and higher layers reuse parts of the LTE specification and add components as needed for the new use cases.

In Release 15, 3GPP began the work to prepare NR for operation in a Non-Terrestrial Network (NTN). The work was performed within the study item "NR to support Non-Terrestrial Networks" and resulted in 3GPP Technical Report (TR) 38.811. See, TR 38.811, Study on New Radio (NR) to support non-terrestrial networks. In Release 16, the work to prepare NR for operation in an NTN network continued with the study item "Solutions for NR to support Non-Terrestrial Network." In parallel, the interest to adapt LTE for operation in NTN is growing. As a consequence, 3GPP is considering introducing support for NTN in both LTE and NR in Release 17.

A satellite radio access network usually includes the following components:
- Satellite: a space-borne platform.
- Earth-based gateway: connects the satellite to a base station or a core network, depending on the choice of architecture.
- Feeder link: the link between a gateway and a satellite.
- Access link: the link between a satellite and a user equipment (UE).

Depending on the orbit altitude, a satellite may be categorized as low earth orbit (LEO), medium earth orbit (MEO), or geostationary earth orbit (GEO) satellite:
- LEO: typical heights ranging from 250 - 1,500 km, with orbital periods ranging from 90 - 120 minutes.
- MEO: typical heights ranging from 5,000 - 25,000 km, with orbital periods ranging from 3 - 15 hours.
- GEO: height at about 35,786 km, with an orbital period of 24 hours.

Satellite systems tend to have significantly higher path loss than terrestrial networks due to their significant orbit height. Overcoming the path loss often requires the access and feeder links to be operated in line-of-sight conditions and the UE to be equipped with an antenna offering high beam directivity.

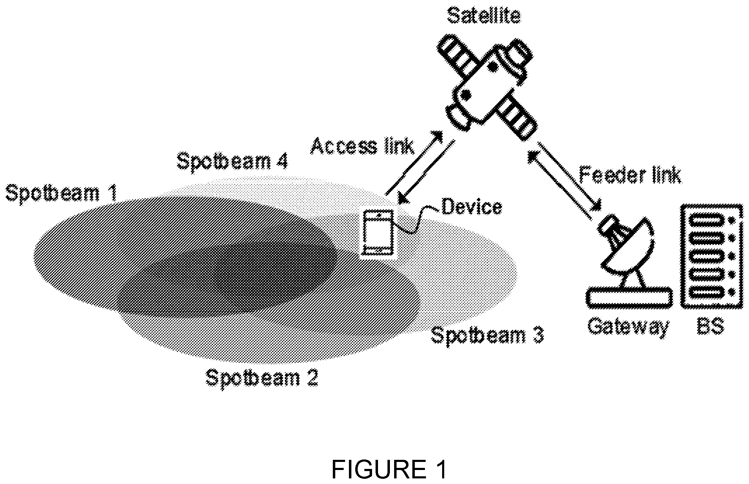

A communication satellite typically generates several beams over a given area. The "footprint" or "spotbeam" of a beam is usually in an elliptic shape, which has been traditionally considered as a cell. The spotbeam may move over the earth surface with the satellite movement (often referred to as the moving beam or moving cell case). Or, the spotbeam may be earth-fixed with some beam pointing mechanism used by the satellite to compensate for its motion (often referred to as the earth-fixed beam or earth-fixed cell case). The size of a spotbeam depends on the system design and may range from tens of kilometers to a few thousands of kilometers. FIGURE 1 illustrates an example architecture of a satellite network with bent pipe transponders.

In comparison to the beams observed in a terrestrial network, the NTN beam may be very wide and may cover an area outside of the area defined by the served cell. A beam covering adjacent cells will overlap and cause significant levels of intercell interference. A typical approach for overcoming the large levels of interference in the NTN involves configuring different cells with different carrier frequencies and polarization modes.

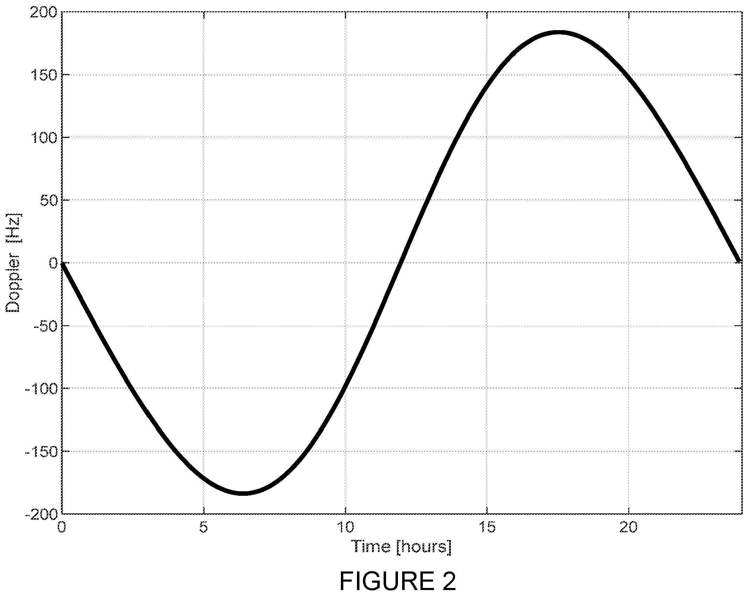

In a LEO NTN, the satellites are moving with a very high velocity. This leads to a Doppler shift of the carrier frequency on the service link of up to 24 ppm for a LEO satellite at 600 km altitude. See, TR 38.821, Solutions for NR to support non-terrestrial networks. The Doppler shift is also time variant due to the satellite motion over the sky. The Doppler shift may vary with up to 0.27 ppm/s for a LEO 600 km satellite. The Doppler shift will impact, i.e., increase or decrease, the frequency received on the service link compared to the transmitted frequency. For GEO NTN, the satellites may move in an orbit inclined relative to the plane of the equator. The inclination introduces a periodic movement of the satellite relative earth which introduces a predictable, and daily periodically repeating Doppler shift of the carrier frequency as exemplified in the below figure. FIGURE 2 illustrates an example of the diurnal Doppler shift of the forward service link observed for a GEO satellite operating from an inclined orbit.

According to 3GPP TR 38.821, ephemeris data should be provided to the UE to assist, for example, with pointing a directional antenna (or an antenna beam) towards the satellite. Knowing its own position such as, for example, because of Global Navigation Satellite System (GNSS) support, a UE may also use the ephemeris data to calculate correct Timing Advance (TA) and Doppler shift. The contents of the ephemeris data and the procedures on how to provide and update such data have not yet been studied in detail.

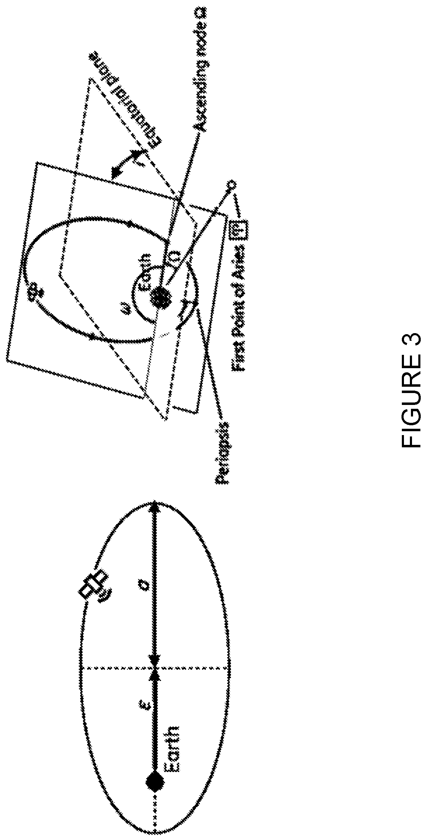

A satellite orbit can be fully described using 6 parameters. A user can choose exactly which set of parameters to use; many different representations are possible. For example, the set of parameters (*a, ε, i, Ω, ω, t*) is often used in astronomy. Here, the semi-major axis "*a*" and the eccentricity "*ε*" describe the shape and size of the orbit ellipse; the inclination "*i*," the right ascension of the ascending node "*Ω*," and the argument of periapsis "*ω*" determine its position in space, and the epoch "*t*" determines a reference time (e.g., the time when the satellites moves through periapsis). This set of parameters is illustrated in FIGURE 3. In FIGURE 3, the periapsis refers to a point where the orbit is nearest to Earth, the first point of Aries refers to the direction towards the sun at the March equinox, and the ascending node refers to the point where the orbit passes upwards through the equatorial plane.

A two-line element set (TLE) is a data format encoding a list of orbital elements of an Earth-orbiting object for a given point in time, the epoch. As an example of a different parametrization, the TLEs may use mean motion *"n"* and mean anomaly *"M"* instead of *a* and *t.* A completely different set of parameters is the position and velocity vector (*x, y, z, vₓ, v_{y}, v_{z}*) of a satellite. These are sometimes called orbital state vectors. They can be derived from the orbital elements and vice versa, since the information they contain is equivalent. All these formulations (and many others) are possible choices for the format of ephemeris data to be used in NTN.

As described above, it is important that a UE can determine the position of a satellite with accuracy of at least a few meters. However, several studies have shown that this might be hard to achieve when using the de-facto standard of TLEs. On the other hand, LEO satellites often have GNSS receivers and can determine their position with some meter level accuracy.

Another aspect discussed during the study item and captured in 3GPP TR 38.821 is the validity time of ephemeris data. Predictions of satellite positions in general degrade with increasing age of the ephemeris data used, due to atmospheric drag, maneuvering of the satellite, imperfections in the orbital models used, etc. Therefore, the publicly available TLE data are updated quite frequently, for example. The update frequency depends on the satellite and its orbit, for example, the update frequency may range from multiple times a day (e.g., for satellites on very low orbits which are exposed to strong atmospheric drag and need to perform correctional maneuvers often) to weekly (e.g., for satellites on relatively higher orbits or satellites that are exposed to less atmospheric drag).

So, while it seems possible to provide the satellite position with the required accuracy, care needs to be taken to meet these requirements such as, for example, when choosing the ephemeris data format or when choosing the orbital model to be used for the orbital propagation.

Ephemeris data consists of at least five parameters describing the shape and position in space of the satellite orbit. It also comes with a timestamp, which is the time when the other parameters describing the orbit ellipse were obtained. The position of the satellite at any given time in the nearer future can be predicted from this data using orbital mechanics. The accuracy of this prediction will however degrade as one projects further and further into the future. The validity time of a certain set of parameters depends on many factors like the type and altitude of the orbit, but also the desired accuracy, and ranges from the scale of a few days to a few years.

In connected state, i.e., RRC_CONNECTED state, a UE has a connection established to the network. The aim of connected-state mobility is to ensure that the connectivity is retained with no interruption or noticeable degradation as the device moves within the network. The UE is required to do searches for new cells both on the current carrier frequency (intra-frequency) and different carrier frequencies (inter-frequency) that are informed by the network. The UE does not make any decisions on its own regarding when it is time to trigger a handover procedure to a different cell (except partly in the case of conditional handover). This is rather based on a variety of triggering conditions. In general, the UE reports the results of any configured measurements to the network so that the network can make a decision on whether or not it is time for handover to a new cell. However, when conditional handover is used, the network partly "delegates" the execution decision to the UE by instructing it to execute a handover when certain trigger conditions are fulfilled.

In 5G NR, handover is a special case of a procedure called "reconfiguration with sync." In addition, a variety of handover mechanisms, such as Dual Active Protocol Stack (DAPS) handover, conditional handover (CHO), and Random Access Channel-less (RACH-less) handover (HO) (only for LTE), have been introduced in specifications to enhance the mobility performance for challenging scenarios that require short interruption time, low-latency and high reliability performance.

Mobility interruption time in a terrestrial network is typically around 30 - 60 milliseconds depending on handover scenario and effective radio conditions. However, to ensure the performance of emerging 5G wireless use cases, such as within factory automation and transport industry, there is a need to shorten this time quite significantly, i.e., as close to zero milliseconds as possible.

It is possible to achieve such a short mobility interruption time in today's 5G networks in a few scenarios, e.g., when the UE moves from one beam to another within the same cell. The motivation to introduce the DAPS handover mechanism is to bring such short interruption times to more handover scenarios, especially the intra-frequency handover scenario, and deployments.

In a "normal" (non-DAPS) handover, the UE typically releases the connection to the source cell before the link to the target cell is established, i.e., uplink and downlink transmission is stopped in the source cell before the UE starts to communicate with the target cell. However, this causes an interruption in the range of a few tens of milliseconds. To improve this, a DAPS handover concept was specified in Rel-16 (for both 4G and 5G) where the UE is able to keep the connection to the source cell while performing the connection to the target cell.

The main characteristics of the DAPS handover mechanism are:
- Continued transmission/reception of user data in the source cell after transmitting/receiving the handover request indicating DAPS handover
- Simultaneous reception of user data from both source and target cells at completion of random access procedure in the target cell
- Uplink transmission of user data switched from source to target cell at completion of the random access procedure in the target cell
- Release of source cell connection at reception of release indicator from target gNodeB (gNB)

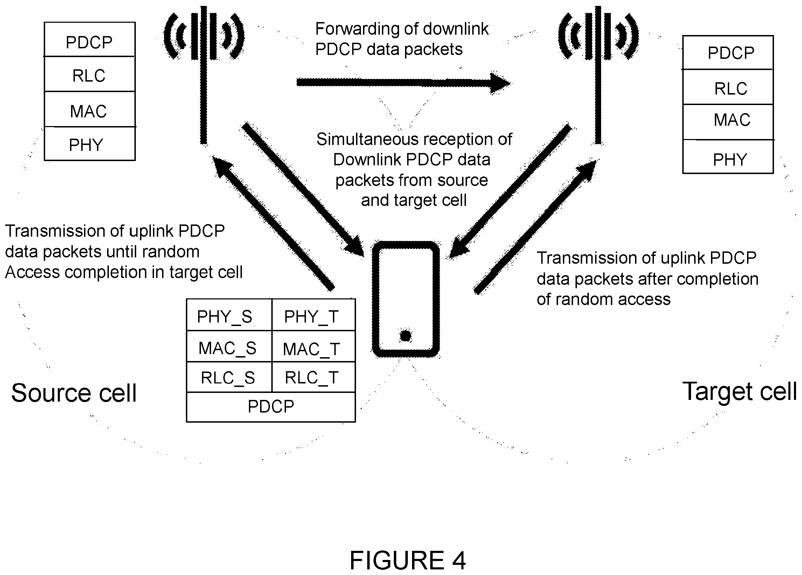

FIGURE 4 illustrates an example overview of DAPS handover. Upon receiving the request to perform a DAPS handover, the UE continues to send and receive user data in the source cell while a new connection to the target cell is established. The UE establishes a new user plane protocol stack for the target cell, containing Physical (PHY), Medium Access Control (MAC) and Radio Link Control (RLC) layers, while keeping the source user plane protocol stack active for transmission and reception of user data in the source cell.

Since the UE may receive user data simultaneously from both source and target cells, the Packet Data Convergence Protocol (PDCP) layer is reconfigured to a common DAPS PDCP entity for the source and target user plane protocol stacks. To secure in-sequence delivery of user data, PDCP Sequence Number (SN) continuation is maintained throughout the handover procedure. For that reason, a common (for source and target) re-ordering and duplication function is provided in the DAPS PDCP entity.

Ciphering/deciphering and header compression/decompression need to be handled separately in the DAPS PDCP entity, depending on the origin/destination of the downlink/uplink data packet.

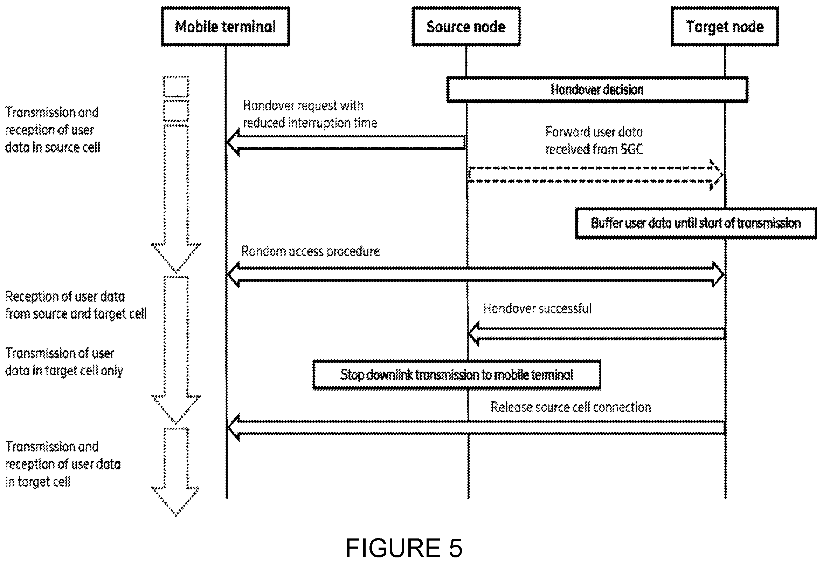

FIGURE 5 illustrates an example of a simplified scenario of DAPS handover. User data received from the core network (CN) is forwarded from the source node controlling the source cell to the target node while it is transmitted to the UE in the source cell. The forwarded user data is buffered in the target node until downlink transmission is started. Once the UE completes the random access procedure to the target cell, uplink transmission of user data is switched from the source to target cell. The UE informs the target node of the last received data packet in the source cell so that the target node can avoid sending duplicate downlink data packets. The target node informs the source node of the successful handover which will trigger the source node to stop its downlink transmission. The target node also instructs the UE to release its connection in the source cell.

The UE transmits user data in the source cell until the random access procedure is completed, and thereafter only in the target cell. Duplication check and in-sequence delivery to the CN is always done either in the source node (until HO is successful completed) or in the target node.

During a DAPS handover, Radio Link Monitoring (RLM) and Radio Link Failure (RLF) detection is maintained for the source cell until the UE completes random access in the target cell.

If the DAPS handover fails before the UE completes the random access procedure (e.g., if timer T304 expires), the UE performs fallback to the source cell, provided the source cell connection is still available, i.e., if RLF for the source cell has not been declared. The UE resumes the connection with the source cell, reconfigures the DAPS PDCP entity to a "normal" PDCP entity, discards target security keys, and reports DAPS handover failure via the source without triggering RRC connection re-establishment.

After the successful fallback to the source cell, depending on what triggered the DAPS handover in the first place, the network may start preparing a new handover to a new target cell or possibly to the same target cell that failed in the first handover attempt.

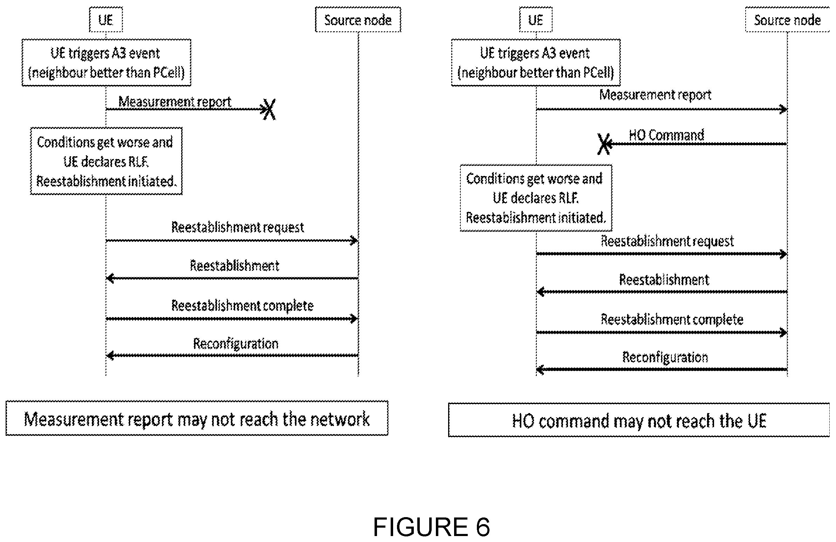

When the radio link becomes degraded and the UE needs to send measurement reports, it is possible that those reports never reach the network since the uplink link is degraded or even if they do, the network tries to respond with a handover command that may never reach the UE, either since the downlink is degraded or the handover command is so large that multiple transmissions are required). In a NTN, even if the UE may know how long a satellite may serve before the service link switch such as, for example, with the help of ephemeris data, channel conditions such as certain terrain, may still yield limited accessibility such as when the UE is shadowed by a mountain. FIGURE 6 illustrates an example of when these two cases might happen.

The main motivation of this handover mechanism is to reduce the number of failure occurrences while a UE is moving, e.g., when a handover between cells fails, or when a connection fails even before a handover (HO) is triggered.

In conditional handover (CHO), instead of preparing one target cell as in the legacy case, multiple candidate target cells are prepared in advance in the network, which enables the HO command to be sent to the UE earlier than at legacy handover when the radio conditions are still good, rather than when conditions start to get degraded. When received, the UE stores the command, instead of applying it immediately. The UE only applies the stored command when a condition configured by the network is satisfied for one of the configured candidate target cells. Then the UE executes the handover and connects to the target node as in legacy HO.

In CHO, instead of transmitting the measurement report, the UE applies the stored message when condition is satisfied. It is also possible to configure two conditions for the UE and associate both to the stored command, i.e. the command is applied only if both conditions are fulfilled, e.g., conditions configured for different types of measurement quantities, like cell coverage represented by Reference Signal Received Power (RSRP), and quality represented by Reference Signal Received Quality (RSRQ).

When the UE executes the HO in one of the prepared cells, the gNB hosting this cell can inform the source cell that the UE successfully performed the HO in its cell, so that the source cell can cancel the resources reserved by the remaining target candidate cells. Considering that the time between the HO preparation, and thus resource reservation, is not known, the source cell can release such resources by informing target candidate cells before the UE executes the HO. It is important to select the candidate target cells and keep the number to a limited amount since a set of resources would need to be reserved while the UE is monitoring for the configured condition.

The network may support early or late data forwarding on the user plane depending on performance requirements of that particular connection. In early data forwarding, data is forwarded during the preparation phase and the main benefit is to enable similar interruption performance as legacy, while increasing robustness. However, the complexity and inter-node transmission resource consumption increases with the number of target cell candidates and the time it takes until the HO is actually performed. Late data forwarding is a simpler alternative, when data starts to be forwarded by the source cell when the UE accesses the target cell. The benefit is that the serving cell only forwards data to a single neighbour cell, i.e., target cell, even if multiple cells have been prepared, and forwarding only starts after the UE accesses the target cell once the condition is fulfilled.

It is also possible that a failure is detected while the UE is monitoring the configured conditions. In legacy, the UE would perform cell selection and continue with a re-establishment procedure. However, with CHO, when the same type of failure is detected, e.g. a RLF or HO failure, the UE can prioritize a cell for which it has a stored HO command and, instead of performing re-establishment, it performs a CHO, which reduces the interruption time and the signalling over the air interface.

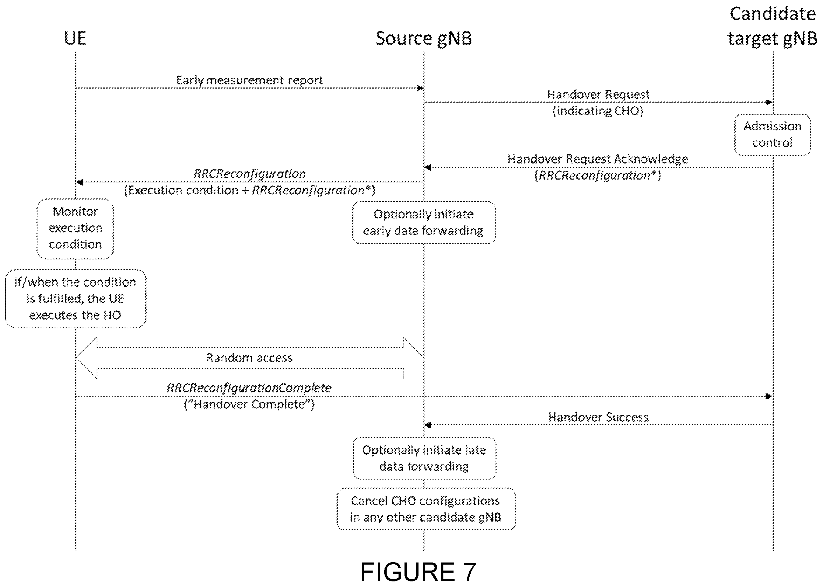

FIGURE 7 illustrates a simplified message diagram for an inter-gNB CHO. The *RRCReconfiguration** indicated with an asterisk ('*') is the HO Command containing the RRC reconfiguration the UE shall apply if/when connecting to the candidate target gNB.

RACH-less handover was introduced as part of the mobility enhancements in LTE Rel-14 and consists of that Message 1 (Msg1) and Message 2 (Msg2) are skipped in the target cell. The UE's first transmission in the target cell is instead the message confirming the completion of the handover, i.e. *RRCConnectionReconfigurationComplete* in LTE and *RRCReconfigurationComplete* in NR (although RACH-less handover is not specified for NR as of Rel-16), i.e. the Radio Resource Control (RRC) message which is normally included in Msg3 in a regular RACH-based handover.

Uplink (UL) transmission resources for the UE's first message in the target cell are allocated either through pre-allocated UL grants or UL grants dynamically allocated through Physical Downlink Control Channel (PDCCH) in the target cell without preceding scheduling request due to the missing random access procedure in the target cell. If pre-allocated UL grants are configured, these are periodic UL transmission resources allocated in the *RRCConnectionReconfiguration* (or, if RACH-less handover were specified for NR, in the *RRCReconfiguration*) message constituting the HO Command. The pre-allocated UL grants potentially achieves shorter interruption, since the PDCCH allocation adds some additional delay, but PDCCH allocation is more flexible.

Since the random access procedure, and therefore also the Random Access Response message is skipped in the target cell, the target gNB cannot determine a precise timing advance (TA) for the UE. Hence, RACH-less HO is limited to scenarios where the TA is known in advance. In practice, this means scenarios where the TA in the target cell is the same as in the UE's source cell or when the target cells is so small that the TA can be assumed to always be 0. Use of RACH-less HO with a TA based on UE estimates is considered for NTN.

There currently exist certain challenge(s). Examples of some of the main challenges that need to be addressed when evolving NR to support NTN include the problem of moving cells, long propagation delays, and large Doppler shifts.

The default assumption in terrestrial network design, e.g., NR or LTE, is that cells are stationary. This is not the case in NTN, especially when LEO satellites are considered. Hence, the problem of moving cells.

A LEO satellite may be visible to a UE on the ground only for a few seconds or minutes. There are two different option for LEO deployment. The beam/cell coverage is fixed with respect to a geographical location with *earth-fixed* beams, i.e., steerable beams from satellites ensure that a certain beam covers the same geographical area even as the satellite moves in relation to the surface of the earth. On the other hand, with moving beams a LEO satellite has fixed antenna pointing direction in relation to the earth's surface, e.g., perpendicular to the earth's surface, and thus cell/beam coverage sweeps the earth as the satellite moves. In that case, the spotbeam, which is serving the UE, may switch every few seconds.

Additionally, the propagation delays in terrestrial mobile systems are usually less than 1 millisecond. In contrast, the propagation delays in NTN can be much longer, ranging from several milliseconds (LEO) to hundreds of milliseconds (GEO) depending on the altitudes of the spaceborne or airborne platforms deployed in the NTN.

Furthermore, the movements of the spaceborne or airborne platforms deployed in NTN may result in large Doppler shifts. For example, a LEO satellite at the height of 600 km can lead to a time-varying Doppler shift as large as 24 ppm.

Another complicating property of a NTN with earth-fixed cells is that when the responsibility for covering a certain geographical cell area switches from one satellite to another, preferably with a short period of overlap (i.e., both the old and the new satellite cover the cell area simultaneously), this may be assumed to involve a cell change, e.g., change of Physical Cell Identity (PCI), which means that all the UEs connected in the old cell (to/via the old satellite) have to be handed over to the new cell (and the new satellite) in a short time (i.e., the period of overlap), which may cause a high load peak on the Random Access Channel (RACH) resources, random access processing resources and processing resources for handover preparation associated with the new cell. If these resources are overloaded, the consequences may involve e.g., extended interruption times, handover failures and radio link failures.

In Rel-16, during the study item phase, RAN2 discussed the mobility procedures to find solutions to address problems that may occur due to the challenges mentioned above for NTN with the motivation to reduce service interruption during handover due to large propagation delay, high handover rates due to moving cells, to introduce mechanisms to improve handover robustness due to small signal strength variation in regions of beam overlap and to compensate for propagation delay differences in the UE measurement windows between cells/beams originating from different satellites. This is especially the case for LEO NTN. In the technical report, which was concluded during the System Information (SI) phase in Rel-16, aspects related to additional triggering conditions for CHO mechanism, adaptation of measurement-based thresholds and events, mobility related configuration, measurement configuration/reporting, and service continuity for mobility between Terrestrial Network (TN) and NTN are captured.

In the technical report, the following enhancements to measurement configuration and reporting are captured:
- Conditional triggering of measurement reporting: The triggering of measurement reporting can be based on UE location. This may be based on UE location vs a reference location, or a combination of location and RSRP/RSRQ.
- Inclusion of location information in the measurement report: Location information may be piggy backed onto the measurement report to provide the network additional information when determining whether to HO. Additional design considerations (e.g., signalling overhead impacts and potential privacy concerns) can be addressed in a work item phase.
- Network compensation of propagation delay difference between satellites: The network can compensate for propagation delay differences in the UE measurement window, e.g., via system information, or in a UE specific manner via dedicated signalling. Other solutions to this issue are not precluded.

The following NTN specific execution conditions for CHO have been studied in the study item phase:
- Location (UE and Satellite) triggering: additional triggering conditions based on UE and satellite location can be considered in NTN and may be considered independently or jointly with another trigger (e.g. measurement based). Location-based conditional HO in LEO scenarios should consider deterministic satellite movement. For example, the location triggering condition may be expressed as distance between the UE and the satellite.
- Time(r)-based triggering: Several triggering conditions considering the time a region is served can be considered. This may be based on UTC time, or a timer-based solution, and may be considered independently or jointly with another trigger (e.g. measurement based). Time-based conditional HO in LEO scenarios should consider deterministic satellite movement.
- Timing advance value based triggering: additional triggering conditions based on timing advance value to the target cell can be considered in NTN and may be considered independently or jointly with another trigger.
- Elevation angles of source and target cells based triggering: additional triggering conditions based on elevation angles of source and target cells can be considered in NTN and may be considered independently or jointly with another trigger.

The technical report has also captured the following aspect on using broadcast signaling related to mobility configuration:
- Broadcast configuration: common signalling in the HO configuration (e.g. T304 and spCellConfigCommon) can be broadcast, possibly via the system information. Although some mobility information common to all UEs may be broadcast, further evaluation on impact to signalling overhead is required given HO command is UE specific and requires dedicated signalling.

One of the HO mechanisms introduced in Rel-16 and, thus, not covered in the technical report is DAPS handover. When adopting DAPS handover for NTN, challenges such as propagation delays and fast moving cells need to be addressed. One part of the DAPS handover concept affected by fast moving NTN cells is the fallback mechanism to the source cell in case DAPS handover fails before completing the random access procedure in the target cell. For the fallback to work, the source cell quality needs to be above a certain level to avoid RLF during the time it takes for the network to prepare a second handover (assuming a new handover need to be performed) and transmit the handover command to the UE. If the fallback or the successive handover fails due to RLF in the source cell, the UE need to select a suitable cell and initiate RRC connection re-establishment.

Satellites in LEO orbits move with high speed (several km/s) relative to a fixed position on earth which may lead to frequent and unavoidable HOs for both stationary and moving UEs. The short visibility time of a LEO satellite for a UE on the ground may decrease the time in which the quality of the source cell (served by the satellite moving out of sight) in case of fallback is above a certain level to avoid RLF. If the DAPS HO was triggered at the source cell edge, an RLF is likely to be declared very quickly if the UE would stay in the source cell after the fallback. Thus, the time available for a successful fallback and a successive HO may be much shorter in NTN handover scenarios with moving cells compared to a terrestrial network (e.g. NR or LTE) where the cells are stationary.

It is anticipated that fallback to source cell at DAPS handover failure will not work well in many NTN deployments and handover scenarios. By performing RRC connection re-establishment directly at DAPS handover failure, the UE can experience a shorter service interruption time compared to if RRC connection re-establishment is triggered after a failed fallback to the source cell.

US 2020/314711 discloses a method performed by a user equipment comprising receiving a handover command message, wherein the handover command message includes at least one handover condition, and performing a handover procedure based on the at least one handover condition.

WO 2020/124386 discloses a method for communication in a non-terrestrial network comprising a user equipment receiving a message from a base station, wherein the message is a handover command comprising a timer generated by the base station, and the user equipment performing a handover from the base station to another base station when the timer expires.

WO 2020/164018 discloses a method for cell handover, and device, which can provide a terminal device with a success rate of cell handover based on a conditional trigger.

WO 2020/092561 discloses a method and apparatus for receiving a broadcast configuration indicating when a change in a RAN function termination occurs is provided, for example, by a timer value. The broadcast configuration may be received from a satellite, blimp or other moving transmitter.

### SUMMARY

Certain aspects of the present disclosure and their embodiments may provide solutions to these or other challenges. For example, certain embodiments provide enhancements to the handover command and its execution for various types of handover mechanisms such as Reconfiguration with sync / Reconfiguration with mobilityInfo, DAPS, CHO, and RACH-less handover so that those HO mechanisms can be adapted for NTN and the challenges such as propagation delays and fast moving cells are addressed.

Aspects of the invention are set out in the independent claims appended hereto. Optional features are set out in the dependent claims.

Certain embodiments may provide one or more of the following technical advantage(s). As an example, an advantage of certain embodiments includes making adaption of various handover mechanisms possible for NTN considering challenges such as propagation delays and fast moving cells.

Other advantages may be readily apparent to one having skill in the art. Certain embodiments may have none, some, or all of the recited advantages.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an example architecture of a satellite network with bent pipe transponders;
FIGURE 2 illustrates an example of the diurnal Doppler shift of the forward service link observed for a GEO satellite operating from an inclined orbit;
FIGURE 3 illustrates an example set of parameters for describing a satellite orbit;
FIGURE 4 illustrates an example overview of DAPS handover;
FIGURE 5 illustrates an example of a simplified scenario of DAPS handover;
FIGURE 6 illustrates an example scenario of a degraded radio link;
FIGURE 7 illustrates a simplified message diagram for an inter-gNB CHO;
FIGURE 8 illustrates an example wireless network, according to certain embodiments;
FIGURE 9 illustrates an example network node, according to certain embodiments;
FIGURE 10 illustrates an example wireless device, according to certain embodiments;
FIGURE 11 illustrate an example user equipment, according to certain embodiments;
FIGURE 12 illustrates a virtualization environment in which functions implemented by some embodiments may be virtualized, according to certain embodiments;
FIGURE 13 illustrates a telecommunication network connected via an intermediate network to a host computer, according to certain embodiments;
FIGURE 14 illustrates a generalized block diagram of a host computer communicating via a base station with a user equipment over a partially wireless connection, according to certain embodiments;
FIGURE 15 illustrates a method implemented in a communication system, according to one embodiment;
FIGURE 16 illustrates another method implemented in a communication system, according to one embodiment;
FIGURE 17 illustrates another method implemented in a communication system, according to one embodiment;
FIGURE 18 illustrates another method implemented in a communication system, according to one embodiment;
FIGURE 19 illustrates an example method by a wireless device, according to certain embodiments;
FIGURE 20 illustrates an example virtual apparatus, according to certain embodiments;
FIGURE 21 illustrates another example method by a wireless device, according to certain embodiments; and
FIGURE 22 illustrates an example method by a network node, according to certain embodiments.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Note that unless explicitly stated otherwise, the methods proposed below concern both fixed and moving cells, service and feeder link switches. Unless explicitly stated otherwise, the terms "cell" and "beam" are used interchangeably. Unless explicitly stated otherwise, the terms "wireless terminal," "User Equipment," "UE," "wireless device," and "device" are used interchangeably in this document. The terms "source cell" or "target cell" do not refer to the global cell ID in this document assuming that a global cell ID is mapped to a geographical area in a tracking area, which is also defined with respect to a geographical area. Certain embodiments of the solution are described using NR terminology, e.g., using the term "gNB" instead of the more generic and RAT-independent term "radio base station," but this should not be seen as a limitation, as the solution is applicable also to other RATs that may be used in NTNs, such as LTE. Unless it is explicitly stated otherwise, the examples described below concern the following handover mechanisms: "Reconfiguration with sync / Reconfiguration with mobilityInfo," "5.2 Dual Active Protocol Stack (DAPS) handover," "5.3 Conditional handover (CHO)," and "RACH-less handover."

### Reconfiguration with sync / Reconfiguration with mobilityInfo

### Handover Command

Consider the cell-switch scenario in the earth-fixed deployment alternative mentioned above, where all UEs connected in an old cell have to be handed over to a new cell, which replaces the old cell on the same geographical area. A number of embodiments are elaborated below to handle this scenario and to mitigate the load peak that it may cause.

In a particular embodiment, for example, a method is used, where the HO command comprises a time offset that indicates to the device when to trigger the random access to the target cell in addition to the NR RRCReconfiguration/LTE RRCConnectionReconfiguration message with target cell parameters towards the device. The offset may be a randomized value, either provided by the network or based on user equipment identifier (UE-ID) or cell-radio network temporary identifier (C-RNTI) or a combination of those with the intention to distribute the random access attempts towards the target cell somewhat evenly. The network may also select the time offsets non-randomly, in a structured way to achieve an optimal distribution of the HO executions in time (e.g. uniformly distributed during the time period when the old and the new cell overlap each other). In a dependent embodiment, the starting point of the offset can be associated with a certain subframe such as the first subframe of a hyper system frame number (H-SFN) in which the configuration message is transmitted by the network or received by the device.

In another particular embodiment, the network assigns a PRACH resource to a device, not necessarily dedicated to a single device, i.e., shared by a group of devices, or PRACH resource from a list of PRACH resources based on UE-ID, C-RNTI, and/or some other identifier or a combination of those.

A method where HO command is broadcasted or provided as part of broadcasted information in the source cell to devices in connected mode or a group of devices in connected mode based on UE-ID, C-RNTI and/or some other identifier or a combination of those. In a dependent embodiment, part of the HO command which can be considered as common is provided via broadcast information whereas device specific information is provided via dedicated signaling. For instance, the common broadcast part may be broadcast multiple times and then the network uses dedicated signaling to send, to each UE connected in the cell, the command that will trigger the actual execution of the HO. This command may include a time offset, as described above, or it may trigger the UE to execute the HO immediately. The HO may be a regular HO, a CHO, or a DAPS HO.

In a particular embodiment, the HO command includes information such as, for example, the time when the HO will occur (and/or the time of overlap, if any), a time associated with an upcoming service or feeder link switch, and/or an indication for the type of the switch, i.e., service link or feeder link.

In another particular embodiment, the network preconfigures a HO Command in the UE - i.e. configured without triggering HO execution - and activates it later at a suitable point in time. The network may activate the HO Command in the UE by transmitting a Medium Access Control (MAC) Control Element (CE) (designed for this purpose) to the UE, or an RRC message or a Downlink Control Information (DCI) (on the PDCCH). Optionally, the network could configure multiple alternative HO Commands in a UE, and each HO Command has an associated identifier, tentatively denoted "execution ID". The activation message would then include the execution ID of the HO Command to be executed. If the execution ID is absent, this implies that the preconfigured HO Command with default status (which may be explicitly or implicitly configured) should be executed, in a particular embodiment. When such multiple HO Commands are preconfigured in a UE, they could be associated with different (candidate) target cells, or multiple HO Commands could be associated with the same target cell, but with different configuration parameter values to apply in the target cell.

An activation command, or activation message, could also be transmitted as a broadcast message or addressed to a group of UEs. If the concerned UEs are preconfigured with only one HO Command each, such a broadcast or multicast activation command would activate the single HO Command in each of the affected UEs. However, broadcast or multicast activation messages may be used also when UEs may have more than one preconfigured HO Command each. The activation message should then include the execution IDs of the HO Commands to be executed. Note that multiple UEs may have preconfigured HO Commands with the same execution ID (i.e. different HO Commands within one UE must have different execution IDs, but the same execution ID may be shared among a set of UEs), thereby enabling the network to easily activate the HO Command of multiple UEs with a single small message.

One example of a broadcast activation message could be a DCI addressed to the Paging RNTI (P-RNTI) on the PDCCH, where the DCI could include one or more execution ID(s). As one option, these broadcast activation DCI messages could be sent on paging occasions. As an additional associated option, the UEs preconfigured with HO Commands could also be configured to monitor all paging occasions during a certain time period or after receiving the preconfigured HO Command.

Instead of execution IDs in a DCI addressed to the P-RNTI, multiple group RNTIs could be configured and each pre-configured UE would have a group RNTI associated with its preconfigured HO Command (or each of its preconfigured HO Command). When receiving a DCI addressed to the group RNTI, the UE executes the preconfigured HO Command associated with the RNTI (i.e. the UE connects to the target cell and applies the RRC configuration in the HO Command).

Optionally, a DCI, or other type of message, serving as activation message (i.e., triggering execution of a HO with preconfigured HO Command) could include an indication of a time period within which the affected UEs should execute the HO at a randomly chosen time. As another option, the activation message could include a time offset until execution or a condition for execution such as, for example, a condition related to channel quality and/or time.

As another option, if a broadcast or multicast activation message contains a list of execution IDs, a timepoint or time period for execution could be associated with each execution ID. Absence of associated timepoint or time period could indicate immediate execution.

The above described embodiments with preconfigured HO Commands and activation messages may be combined with CHO, where the gNB can choose to trigger execution in the UE, prior to fulfillment of the configured CHO condition(s), e.g. by pointing out one of the preconfigured (conditional) HO Commands with an execution ID.

### Execution of HO command and beyond

In a particular embodiment, the wireless device can choose a time offset value (normalized over a common number broadcasted by gNB) based on, e.g., the combination of the device's velocity and the distance between the wireless device and the satellite for target cell. Such alternative has the potential to reduce RACH contention probability by, for instance, letting the wireless device closest to the target satellite launch the random access first. The common number which gNB broadcasts may be determined by the current cell capacity and the remaining expected time to be served.

### DAPS HO

### HO Command

Consider the cell-switch scenario in the earth-fixed deployment alternative mentioned above, where all UEs connected in an old cell have to be handed over to a new cell, which replaces the old cell on the same geographical area. A number of embodiments are elaborated below to handle this scenario and to mitigate the load peak that it may cause.

In a particular embodiment, a method is used, where the handover command comprises a time offset that indicates to the device when to trigger the random access to the target cell in addition to the NR RRCReconfiguration/LTE RRCConnectionReconfiguration message with target cell parameters towards the wireless device. The offset may be a randomized value, either provided by the network or based on UE-ID or C-RNTI or a combination of those with the intention to distribute the random access attempts towards the target cell somewhat evenly. The network may also select the time offsets non-randomly, in a structured way to achieve an optimal distribution of the handover executions in time (e.g. uniformly distributed during the time period when the old and the new cell overlap each other). In a further particular embodiment, the starting point of the offset can be associated with a certain subframe such as the first subframe of a H-SFN in which the configuration message is transmitted by the network or received by the wireless device.

In another particular embodiment, the network assigns a PRACH resource to a device, not necessarily dedicated to a single device, i.e., shared by a group of devices, or PRACH resource from a list of PRACH resources based on UE-ID, C-RNTI, and/or some other identifier or a combination of those.

According to certain embodiments, a method is provided where handover command is broadcasted or provided as part of broadcasted information in the source cell to devices in connected mode or a group of devices in connected mode based on UE-ID, C-RNTI and/or some other identifier or a combination of those. In a particular embodiment, part of the HO command which can be considered as common is provided via broadcast information whereas device specific information is provided via dedicated signaling. For instance, the common broadcast part may be broadcast multiple times and then the network uses dedicated signaling to send, to each UE connected in the cell, the command that will trigger the actual execution of the HO. This command may include a time offset, as described above, or it may trigger the UE to execute the HO immediately. The HO may be a regular HO, a CHO, or a DAPS HO.

In a particular embodiment, the HO command includes information such as, for example, the time when the HO will occur (and/or the time of overlap, if any), a time associated with an upcoming service or feeder link switch and/or an indication for the type of the switch, i.e., service link or feeder link.

In another particular embodiment, the network preconfigures a HO Command in the UE - i.e. configured without triggering HO execution - and activates it later at a suitable point in time. The network may activate the HO Command in the UE by transmitting a MAC CE (designed for this purpose) to the UE, or an RRC message or a DCI (on the PDCCH). Optionally, the network could configure multiple alternative HO Commands in a UE and each HO Command has an associated identifier, tentatively denoted "execution ID". The activation message would then include the execution ID of the HO Command to be executed. If the execution ID is absent, this implies that the preconfigured HO Command with default status (which may be explicitly or implicitly configured) should be executed. When such multiple HO Commands are preconfigured in a UE, they could be associated with different (candidate) target cells, or multiple HO Commands could be associated with the same target cell, but with different configuration parameter values to apply in the target cell.

An activation command, or activation message, could also be transmitted as a broadcast message or addressed to a group of UEs. If the concerned UEs are preconfigured with only one HO Command each, such a broadcast or multicast activation command would activate the single HO Command in each of the affected UEs. However, broadcast or multicast activation messages may be used also when UEs may have more than one preconfigured HO Command each. The activation message should then include the execution IDs of the HO Commands to be executed. Note that multiple UEs may have preconfigured HO Commands with the same execution ID (i.e. different HO Commands within one UE must have different execution IDs, but the same execution ID may be shared among a set of UEs), thereby enabling the network to easily activate the HO Command of multiple UEs with a single small message.

One example of a broadcast activation message could be a DCI addressed to the P-RNTI on the PDCCH, where the DCI could include one or more execution ID(s). As one option, these broadcast activation DCI messages could be sent on paging occasions. As an additional associated option, the UEs preconfigured with HO Commands could also be configured to monitor all paging occasions during a certain time period or after receiving the preconfigured HO Command.

Instead of execution IDs in a DCI addressed to the P-RNTI, multiple group RNTIs could be configured and each pre-configured UE would have a group RNTI associated with its preconfigured HO Command (or each of its preconfigured HO Command). When receiving a DCI addressed to the group RNTI, the UE executes the preconfigured HO Command associated with the RNTI (i.e. the UE connects to the target cell and applies the RRC configuration in the HO Command).

Optionally, in a particular embodiment, a DCI, or other type of message, serving as activation message (i.e. triggering execution of a HO with preconfigured HO Command) could include an indication of a time period within which the affected UEs should execute the HO at a randomly chosen time. As another option, the activation message could include a time offset until execution or a condition for execution such as, for example, related to channel quality and/or time.

As another option, if a broadcast or multicast activation message contains a list of execution IDs, a timepoint or time period for execution could be associated with each execution ID. Absence of associated timepoint or time period could indicate immediate execution.

In a particular embodiment, the HO command requesting DAPS HO includes an indicator that disables the fallback mechanism to the source cell triggered by the UE in case of DAPS HO failure before random access procedure is completed in the target cell. The inclusion of the indicator in the HO command could be based on known characteristics of the satellite or of the source cell serving the UE. Examples of such characteristics could be size of the cell, velocity of the satellite, expected time to be served, etc. If the indicator to disable the fallback mechanism is included in the HO command, the UE will release the source cell connection and perform RRC connection re-establishment as a mean to recover from the DAPS HO failure.

As an alternative solution, the indicator to disable the fallback mechanism is provided in the SI broadcasted in the serving cell.

In another embodiment, the HO command requesting DAPS HO contains a set of new parameters required for the UE to calculate whether the quality of the source cell is good enough for fallback in case of DAPS HO failure. As an example, the parameters could consist of counters and timers similar to the legacy counters N310, N311 and legacy timer T310 used for radio link monitoring and RRC L3 filtering for RLF. To ensure a margin to avoid RLF after fallback to the source cell, the new counters and the new timer should be set differently for the source radio link unavailable criterion used for fallback than for the criterion used for RLF declaration. In case of a DAPS HO failure, the UE will only perform fallback if the quality of the source radio link is above a given level (calculated by the UE based on the new parameters provided by the network) to ensure a margin to avoid RLF before a new HO can be triggered. If the quality of the source radio link is below this level, the UE will instead release the source cell connection and perform RRC connection re-establishment to recover from the DAPS HO failure.

As an alternative solution, the new parameters required for the UE to calculate the source radio link unavailable criterion used for fallback is provided in the SI broadcasted in the serving cell.

The above described embodiments with preconfigured HO Commands and activation messages may be combined with CHO, where the gNB can choose to trigger execution in the UE, prior to fulfillment of the configured CHO condition(s), e.g. by pointing out one of the preconfigured (conditional) HO Commands with an execution ID.

### Execution of HO command and beyond

According to certain embodiments, a method is provided where the UE autonomously enables or disables the fallback mechanism to the source cell at DAPS HO failure, based on known characteristics of the satellite or of the source cell serving the UE. Examples of such characteristics are size of the cell, velocity of the satellite, expected time to be served, elevation angle and ephemeris data. The UE may enable or disable the fallback mechanism at the time the characteristics of the satellite/source cell is known by the UE, or at the time of DAPS handover execution.

In another embodiment, the UE always disables the fallback mechanism to the source cell whenever served by an NTN cell regardless of the characteristics of the satellite/source cell.

In a particular embodiment, the device can choose a time offset value (normalized over a common number broadcasted by gNB) based on, e.g., the combination of the device's velocity and the distance between the device and the satellite for target cell. Such alternative has the potential to reduce RACH contention probability by, for instance, letting the device closest to the target satellite launch the random access first. The common number which gNB broadcasts may be determined by the current cell capacity and the remaining expected time to be served.

### CHO

### HO Command containing the RRC reconfiguration the UE shall apply if/when connecting to the candidate target cell.

According to certain embodiments, a method is provided where handover command comprises of an offset that indicates to the device when to trigger the random access to the target cell in addition to the NR RRC Reconfiguration/LTE RRC Connection Reconfiguration message with target cell parameters towards the device. The offset may be a randomized value either provided by the network or based on UE-ID or C-RNTI or a combination of those with the intention to distribute the random access attempts towards the target cell somewhat evenly.

As an alternative to an offset, the HO is triggered at an absolute time (e.g. Universal Coordinated Time (UTC)), in a particular embodiment. In a GEO NTN the time may be configured so that a UE is handed over to a new cell once the Doppler shift experienced on the return or forward part of the service link is expected to exceed a certain threshold (see Figures 2a-2b) above which the UE or the base station may be incapable of maintaining the connection. This method may equally well be used to for RRC IDLE or RRC INACTIVE mode mobility to support such as, for example, cell selection or cell reselection. For those cases, a UE should refrain from (re)selecting a GEO satellite during certain configured time periods during which the Doppler shift experienced on the return or forward part of the service link is expected to exceed a certain threshold, as discussed above with regard to FIGURES 2 and 3.

In another particular embodiment, the network assigns a PRACH resource to a device. The PRACH resource is not necessarily dedicated to a single device and, thus, may be a common resource that is shared by other devices. Alternatively, the network may assign a PRACH resource from a list of PRACH resources based on UE-ID, C-RNTI, and/or some other identifier or a combination of those. In a further particular embodiment, the starting point of the offset can be associated with a certain subframe such as the first subframe of a H-SFN in which the configuration message is transmitted by the network or received by the device.

In a particular embodiment, a method is provided where HO command is broadcasted or provided as part of broadcasted information in the source cell to devices in connected mode or a group of devices in connected mode based on UE-ID, C-RNTI and/or some other identifier or a combination of those. In a further particular embodiment, part of the HO command that can be considered as common is provided via broadcast information whereas device specific information is provided via dedicated signaling.

In a particular embodiment, the HO command includes information about the upcoming service or feeder link switch and/or an indication for the type of the switch, i.e., service link or feeder link.

In another particular embodiment, the HO command may contain the RRC reconfiguration the UE shall apply if/when connecting to the candidate target cell that is based on a condition indicating a position with respect to the satellite node serving the candidate target cell or a reference point, e.g., nadir, in the candidate target cell.

### Execution of HO command and beyond

In a particular embodiment, the wireless device can choose a time offset value (normalized over a common number broadcasted by gNB) based on, for example, the combination of the wireless device's velocity and the distance between the wireless device and the satellite for target cell. Such alternative has the potential to reduce RACH contention probability by, for instance, letting the wireless device closest to the target satellite launch the random access first. The common number which gNB broadcasts may be determined by the current cell capacity and the remaining expected time to be served.

### RACH-less HO

### HO Command

According to certain embodiments, a method is provided where the HO command comprises of an offset that indicates to the wireless device when to trigger the random access to the target cell in addition to the NR RRC Reconfiguration/LTE RRC Connection Reconfiguration message with target cell parameters towards the wireless device. The offset may be a randomized value either provided by the network or based on UE-ID or C-RNTI or a combination of those with the intention to distribute the random access attempts towards the target cell somewhat evenly. In another embodiment, the network assigns a PRACH resource to a wireless device or PRACH resource from a list of PRACH resources based on UE-ID, C-RNTI, and/or some other identifier or a combination of those. The PRACH resource is not necessarily dedicated to a single device and may instead by a common resource that is shared by other devices, in a particular embodiment.

In a particular embodiment, a method is provided where HO command is broadcasted or provided as part of broadcasted information in the source cell to devices in connected mode or a group of wireless devices in connected mode based on UE-ID, C-RNTI and/or some other identifier or a combination of those. In a further particular embodiment, part of the HO command which can be considered as common is provided via broadcast information whereas wireless device specific information is provided via dedicated signaling.

In a particular embodiment, the HO command includes information about the upcoming service or feeder link switch and/or an indication for the type of the switch, i.e., service link or feeder link.

In a particular embodiment, the HO Command contains the ephemeris data of the target satellite, as well as any further information required for the UE to calculate an accurate enough HO Command (e.g. a common TA part provided by the target satellite/gNB for the target cell). This allows the UE to apply a correct TA and enables usage of RACH-less HO in all NTN cells. An alternative would be that the target gNB provides a pointer to the ephemeris data that belongs to the target gNB in a group of ephemeris data of neighbouring cells served by satellites instead of providing the ephemeris data in the HO command.

In another particular embodiment, the source gNB is aware of the UE's location with sufficient accuracy to allow accurate enough TA calculation when combined with sufficiently accurate ephemeris data (or position) for the target satellite (i.e. the satellite serving the target cell) and any other TA component (such as a "common" TA component in the target cell). This is leveraged to provide the UE with a TA for the target cell, where the TA is accurate enough to allow the UE's initial uplink transmission in the target cell to keep the accumulated timing error from different sources within the cyclic prefix, or even a fraction of the cyclic prefix. The TA can be provided to the UE in the *RRCReconfiguration* message (or *RRCConnectionReconfiguration* message if the NTN RAT is LTE) used to convey the HO Command to the UE. As one alternative, the source gNB includes the TA in the *RRCReconfiguration* message in parallel with the HO Command (i.e. in the same *RRCReconfiguration* message. As another alternative, the source gNB inserts the TA in the actual HO Command received from the target gNB. In both these alternatives, the source gNB has received the position or ephemeris data of the target satellite prior to calculating the TA for the UE. The source gNB may have received this data from the target satellite, the target gNB or some other entity in the network. If the source gNB receives the position or ephemeris data of the target satellite from the target gNB, an attractive alternative is that the source gNB receives this data in the Handover Request Acknowledge message from the target gNB.

As yet another alternative, the source gNB sends the UE position data to the target gNB, e.g. in the HO Request message across the Xn interface (or the X2 interface if the NTN RAT is based on LTE) and the target gNB calculates the TA for the UE and includes it in the HO Command that is sent to the source gNB in the HO Request Acknowledge message.

In all the above alternatives where the source gNB is aware of the UE's position/location, the source gNB may have obtained the UE's position data from the UE (which in turn may have obtained it from GNSS measurements), such as, for example, in a *MeasurementReport* RRC message, or from a network based UE positioning method or a network assisted UE positioning method or a network based UE positioning method with UE assistance.

### Execution of HO command and beyond

In a particular embodiment, the wireless device can choose a time offset value (normalized over a common number broadcasted by gNB) based on, e.g., the combination of the wireless device's velocity and the distance between the wireless device and the satellite for target cell. Such alternative has the potential to reduce RACH contention probability by, for instance, letting the wireless device closest to the target satellite launch the random access first. The common number which gNB broadcasts may be determined by the current cell capacity and the remaining expected time to be served.

Throughout this disclosure, the terms "beam" and "cell" may be used interchangeably, unless explicitly noted otherwise. Although certain embodiments have been described with reference to NTN, the methods proposed apply to any wireless network (e.g., any wireless network dominated by line-of-sight conditions). Certain embodiments (or portions thereof) may be implemented in one or more standards, such as 3GPP release 17+, 3GPP TS 38.331, 3GPP TS 38.321, and/or NR TR 38.821 Rel-16.

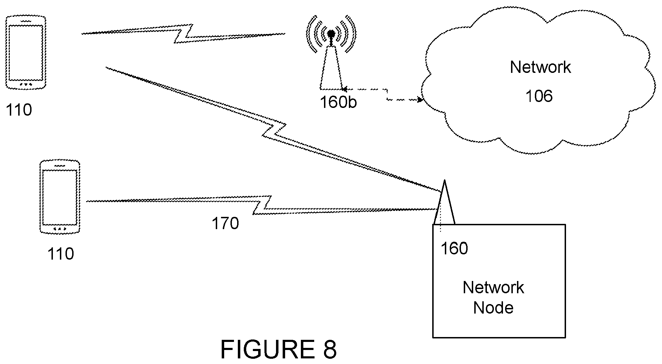

Although the subject matter described herein may be implemented in any appropriate type of system using any suitable components, the embodiments disclosed herein are described in relation to a wireless network, such as the example wireless network illustrated in FIGURE 8. For simplicity, the wireless network of FIGURE 8 only depicts network 106, network nodes 160 and 160b, and wireless devices (WDs) 110. In practice, a wireless network may further include any additional elements suitable to support communication between wireless devices or between a wireless device and another communication device, such as a landline telephone, a service provider, or any other network node or end device. Of the illustrated components, network node 160 and WD 110 are depicted with additional detail. The wireless network may provide communication and other types of services to one or more WDs to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

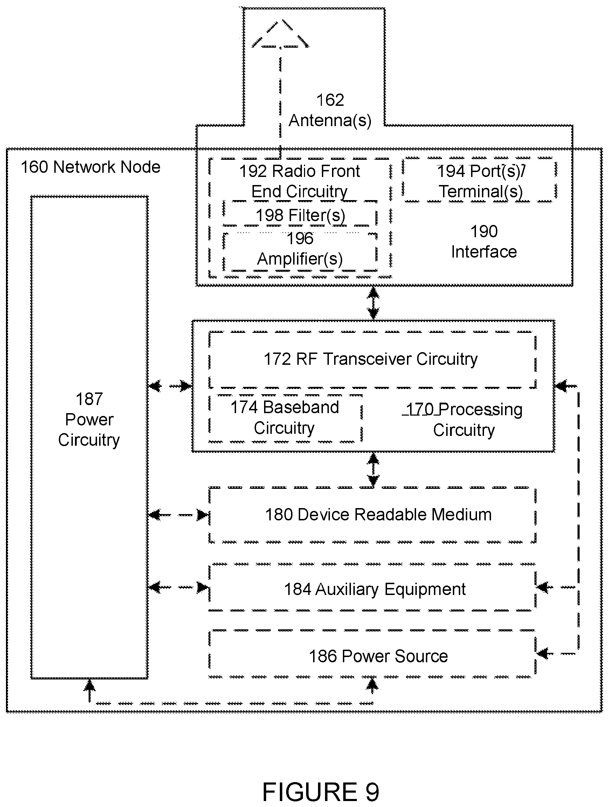

FIGURE 9 illustrates an example network node 160, according to certain embodiments. As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NRNodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 9, network node 160 includes processing circuitry 170, device readable medium 180, interface 190, auxiliary equipment 184, power source 186, power circuitry 187, and antenna 162. Although network node 160 illustrated in the example wireless network of FIGURE 8 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 9 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

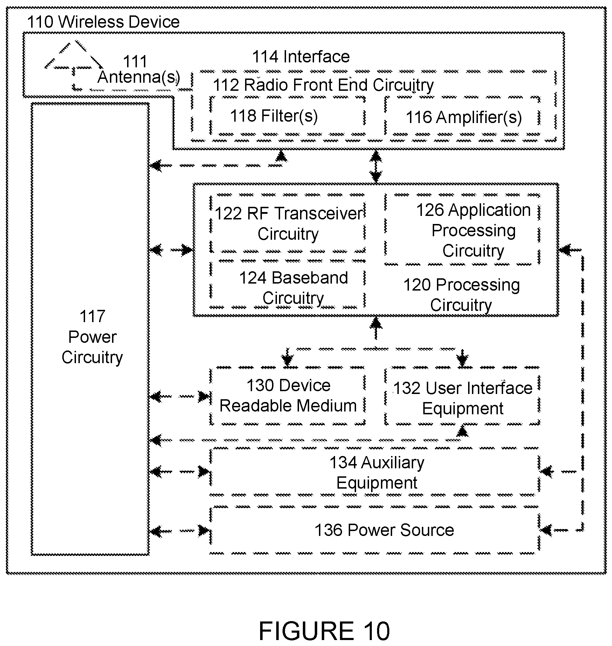

FIGURE 10 illustrates an example WD 110, according to certain embodiments. As used herein, WD refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

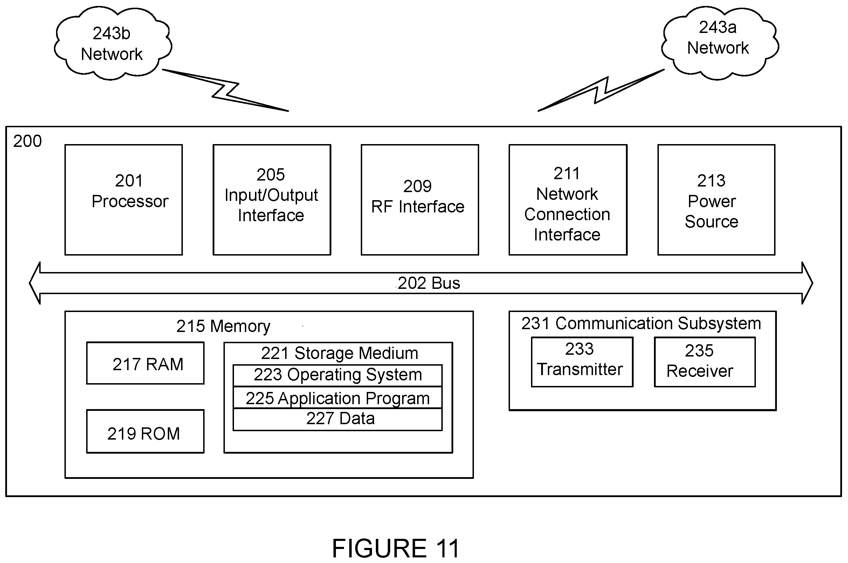

FIGURE 11 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3^{rd} Generation Partnership Project (3GPP), including a NB-IoT UE, a machine type communication (MTC) UE, and/or an enhanced MTC (eMTC) UE. UE 200, as illustrated in Figure 8, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 11 is a UE, the components discussed herein are equally applicable to a WD, and vice-versa.

In FIGURE 11, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 213, and/or any other component, or any combination thereof. Storage medium 221 includes operating system 223, application program 225, and data 227. In other embodiments, storage medium 221 may include other similar types of information. Certain UEs may utilize all of the components shown in Figure 8, or only a subset of the components. The level of integration between the components may vary from one UE to another UE. Further, certain UEs may contain multiple instances of a component, such as multiple processors, memories, transceivers, transmitters, receivers, etc.

In FIGURE 11, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 11, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 11, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

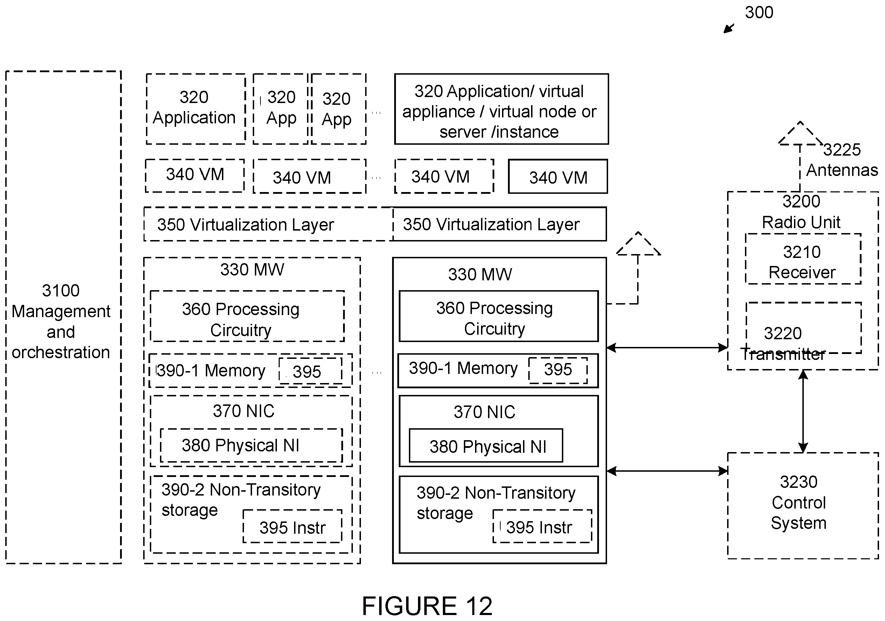

FIGURE 12 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 12, hardware 330 may be a standalone network node with generic or specific components. Hardware 330 may comprise antenna 3225 and may implement some functions via virtualization. Alternatively, hardware 330 may be part of a larger cluster of hardware (e.g., such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 12.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

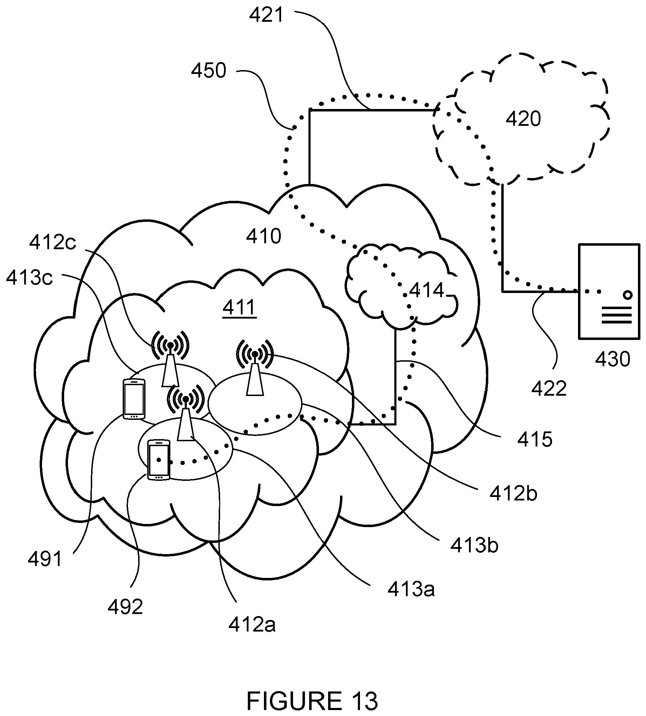

With reference to FIGURE 13, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 13 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

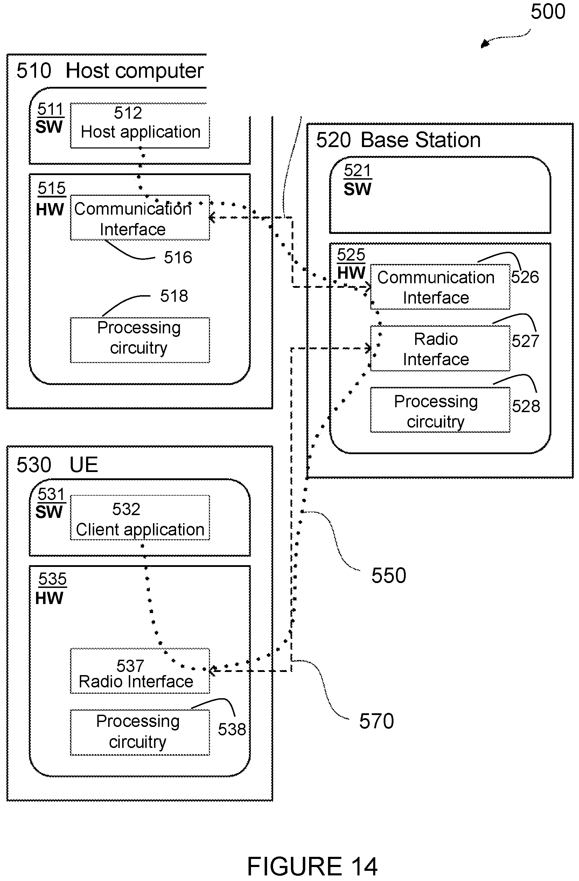

Example implementations, in accordance with an embodiment, of the UE, base station and host computer discussed in the preceding paragraphs will now be described with reference to FIGURE 14. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 14) served by base station 520. Communication interface 526 may be configured to facilitate connection 560 to host computer 510. Connection 560 may be direct or it may pass through a core network (not shown in FIGURE 14) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in Figure 11 may be similar or identical to host computer 430, one of base stations 412a, 412b, 412c and one of UEs 491, 492 of Figure 10, respectively. This is to say, the inner workings of these entities may be as shown in FIGURE 14 and independently, the surrounding network topology may be that of FIGURE 13.

In FIGURE 14, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the data rate or latency and thereby provide benefits such as reduced user waiting time or better responsiveness.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

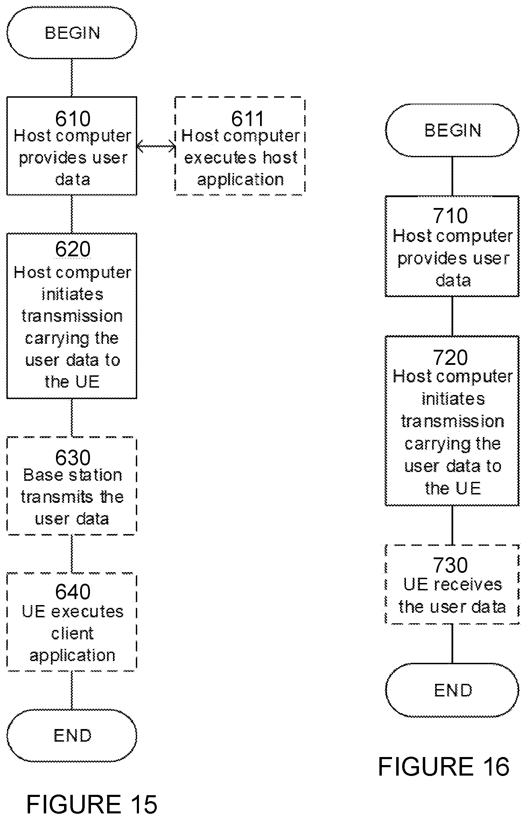

FIGURE 15 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 15 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 16 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 16 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

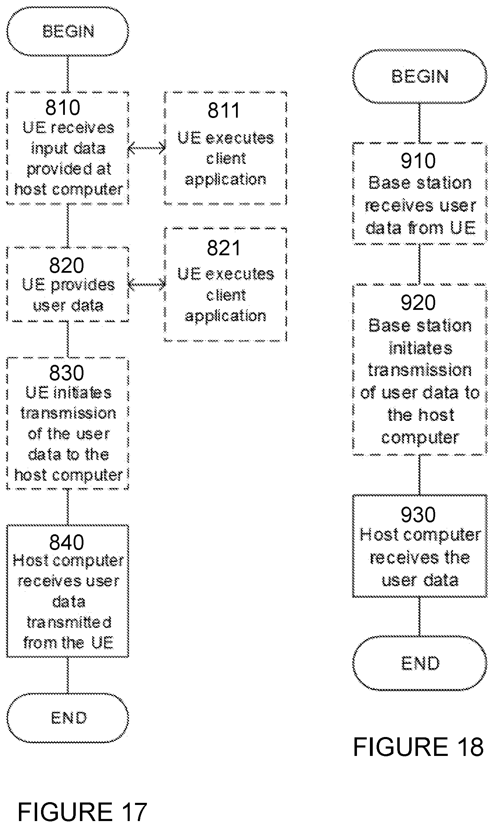

FIGURE 17 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 17 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 18 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 18 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

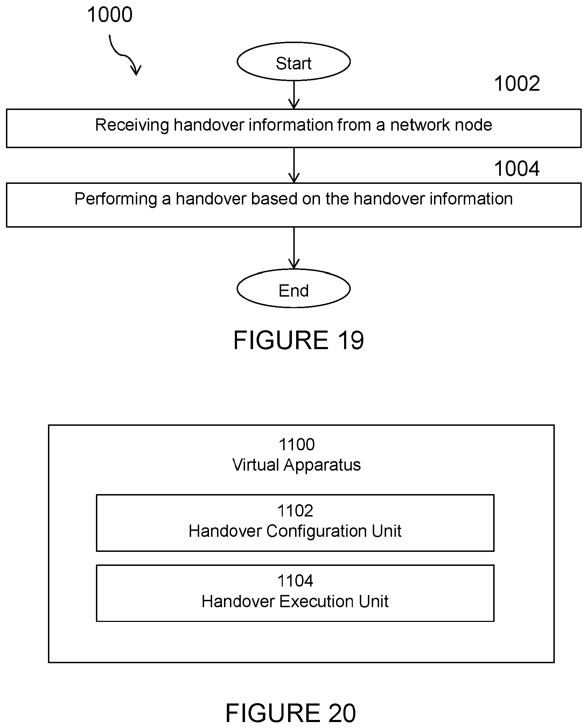

FIGURE 19 depicts a method 1000 in accordance with particular embodiments. In certain embodiments, the method may be implemented by a wireless device, such as wireless device 110 (e.g., UE 200) discussed above. For example, the wireless device 110 may comprise processing circuitry 120 (e.g., processing circuitry 201) configured to execute a computer program that causes the wireless device 110 to perform the method. The method begins at step 1002 with receiving HO information from a network node 160 and proceeds to step 1004 with performing a HO (e.g., from a source cell to a target cell) based on the HO information. Examples of HO information received from the network node 160 include the HO commands described above with respect to the headings "Reconfiguration with sync / Reconfiguration with mobilityInfo," "DAPS HO," "CHO," and " RACH-less handover." Further examples are described below with respect to the example embodiments.

In certain embodiments, a network node 160 is configured to perform analogous/reciprocal methods in order to facilitate the HO by the wireless device 110. For example, the network node 160 may determine the HO information to send to the wireless device 110 and may send the HO information to the wireless device 110. Examples of HO information sent by the network node 160 include the HO commands described above with respect to the headings "Reconfiguration with sync / Reconfiguration with mobilityInfo," "DAPS HO," "CHO," and "RACH-less handover." Further examples are described below with respect to the example embodiments. In certain embodiments, methods performed by a network node 160 may be implemented by network node 160 described above with respect to FIGURE 9. For example, the network node may comprise processing circuitry 170 configured to execute a computer program that causes the network node to perform the methods.

FIGURE 20 illustrates a schematic block diagram of a virtual apparatus 1100 in a wireless network (for example, the wireless network shown in FIGURE 8). The apparatus may be implemented in a wireless device or network node (e.g., wireless device 110 or network node 160 shown in FIGURE 8). Apparatus 1700 is operable to carry out the example method described with reference to FIGURE 19 and possibly any other processes or methods disclosed herein. It is also to be understood that the method of FIGURE 19 is not necessarily carried out solely by apparatus 1100. At least some operations of the method can be performed by one or more other entities.

Virtual Apparatus 1100 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause HO configuration unit 1102 and HO execution unit 1104, and any other suitable units of apparatus 1100 to perform corresponding functions according one or more embodiments of the present disclosure.

As illustrated in FIGURE 20, virtual apparatus 1100 includes HO configuration unit 1102 and HO execution unit 1704. HO configuration unit 1102 is configured to receive HO information from a network node 160 to configure HO execution unit 1104 to perform the HO according to the HO information. HO execution unit 1104 is configured to perform the HO according to the HO information.

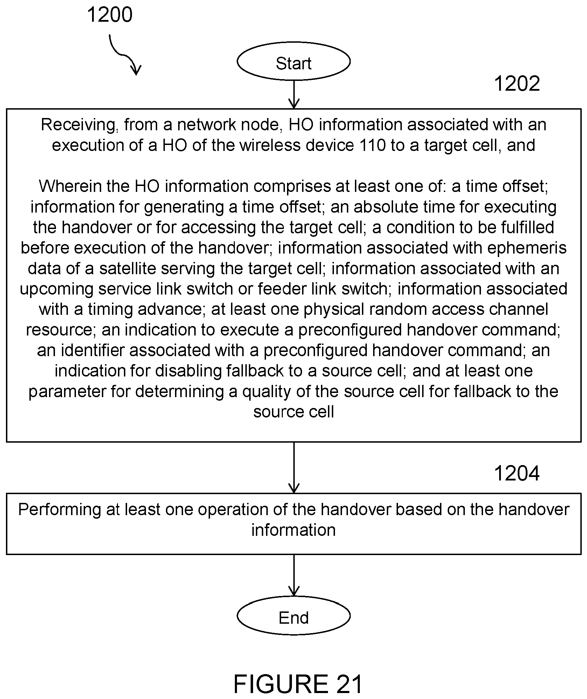

FIGURE 21 illustrates another method 1200 performed by a wireless device, according to certain embodiments. In certain embodiments, the method may be implemented by wireless device 110 (e.g., UE 200) discussed above. For example, the wireless device 110 may comprise processing circuitry 120 (e.g., processing circuitry 201) configured to execute a computer program that causes the wireless device 110 to perform the method.

The method begins at step 1202 when the wireless device 110 receives, from a network node 160, HO information associated with an execution of a HO of the wireless device 110 to a target cell. The HO information comprises at least one of: a time offset; information for generating a time offset; an absolute time for executing the handover or for accessing the target cell; a condition to be fulfilled before execution of the handover; information associated with ephemeris data of a satellite serving the target cell; information associated with an upcoming service link switch or feeder link switch; information associated with a timing advance; at least one physical random access channel resource; an indication to execute a preconfigured handover command; an identifier associated with a preconfigured handover command; an indication for disabling fallback to a source cell; and at least one parameter for determining a quality of the source cell for fallback to the source cell. At step 1204, the wireless device 110 performs at least one operation of the HO based on the HO information.

In a particular embodiment, at least a portion of the HO information is received in a HO command.

In a particular embodiment, at least a portion of the HO command is received in a broadcast, and the broadcast indicates a group of wireless devices to which the HO command applies. For example, the HO command may include a broadcast flag in the message that indicates that the wireless device 110 or group of wireless devices should execute the HO command.

In a particular embodiment, at least a portion of the HO command is received via dedicated signaling.

In a particular embodiment, the HO information indicates to trigger a random access to a target cell according to the time offset.

In a further particular embodiment, the time offset has a randomized value. For example, in a further particular embodiment, the time offset depends on at least one of a UE-ID or a C-RNTI.

In a further particular embodiment, the time offset has a non-randomized value.

In a further particular embodiment, a starting point of the time offset is associated with a particular subframe, or the time offset corresponds to an absolute time.

In a particular embodiment, the at least one physical random access channel resource is configured to be shared by the wireless device 110 and one or more other wireless devices 110 in a same group as the wireless device 110.

In a particular embodiment, the wireless device 110 uses an identifier to determine the one or more random access resources for accessing the target cell from a list of random access resources.

In a particular embodiment, the at least a portion of the HO information is received via at least one of: a MAC CE, RRC signaling, and DCI.

In a particular embodiment, the HO comprises a DAPS HO, a CHO, or a RACH-less handover.

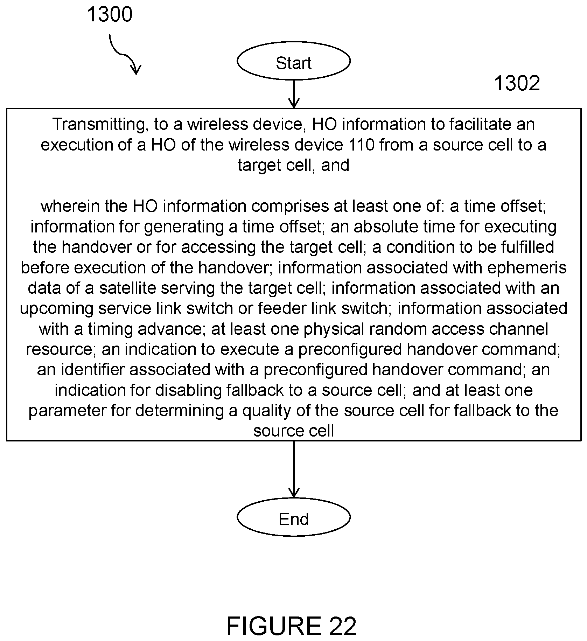

FIGURE 22 illustrates a method 1300 performed by a network node 160, according to certain embodiments. In certain embodiments, the method may be implemented by network node 160 (e.g., UE 200) discussed above. For example, the network node 160 may comprise processing circuitry 170 configured to execute a computer program that causes the network node 160 to perform the method.

The method begins at step 1302 when the network node 160 transmits, to a wireless device 110, HO information to facilitate an execution of a HO of the wireless device 110 from a source cell to a target cell. The HO information comprises at least one of: a time offset; information for generating a time offset; an absolute time for executing the HO or for accessing the target cell; a condition to be fulfilled before execution of the HO; information associated with ephemeris data of a satellite serving the target cell; information associated with an upcoming service link switch or feeder link switch; information associated with a timing advance; at least one physical random access channel resource; an indication to execute a preconfigured HO command; an identifier associated with a preconfigured HO command; an indication for disabling fallback to a source cell; and at least one parameter for determining a quality of the source cell for fallback to the source cell.

In a particular embodiment, at least a portion of the HO information is transmitted in a HO command.

In a particular embodiment, at least a portion of the HO command is transmitted in a broadcast, and the broadcast indicates a group of wireless devices to which the HO command applies.

In a particular embodiment, at least a portion of the HO command is sent via dedicated signaling.

In a particular embodiment, the HO information indicates to trigger a random access to the target cell according to the time offset.

In a particular embodiment, the time offset has a randomized value.

In a further particular embodiment, the time offset has a non-randomized value.

In a further particular embodiment, a starting point of the time offset is associated with a particular subframe or the time offset corresponds to an absolute time.

In a particular embodiment, the at least one PRACH resource is configured to be shared by the wireless device 110 and one or more other wireless devices 110 in a same group as the wireless device 110.

In a particular embodiment, the at least a portion of the handover information is received via at least one of: a MAC CE, RRC signaling, and DCI.

In a particular embodiment, prior to the HO, the network node 160 sends the wireless device 110 information indicating the pre-configured HO command.

In a particular embodiment, the handover includes a DAPS HO, a CHO, or a RACH-less HO.

In a particular embodiment, the network node 160 is associated with a NTN.

As used herein, the term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

In some embodiments a computer program, computer program product or computer readable storage medium comprises instructions which when executed on a computer perform any of the embodiments disclosed herein. In further examples the instructions are carried on a signal or carrier and which are executable on a computer wherein when executed perform any of the embodiments disclosed herein.

## Claims

1. A method (1200) performed by a wireless device (110), the method comprising:
receiving (1202), from a network node (160), handover information associated with an execution of a handover of the wireless device to a target cell, wherein at least one of the network node or the target cell is associated with a non-terrestrial network, NTN, network node and the handover information comprises at least one of:
a randomised time offset;
information for generating a randomised time offset;
information associated with ephemeris data of a satellite serving the target cell;
a time associated with an upcoming service or feeder link switch;
an indication of whether an upcoming link switch is a service link switch or a feeder link switch;
information associated with a timing advance;
an indication to execute a previously received preconfigured handover command;
an identifier associated with a previously received preconfigured handover command;
an indication for disabling fallback to a source cell; and
at least one parameter for determining a quality of the source cell for fallback to the source cell; and
performing at least one operation of the handover based on the handover information.

2. The method of Claim 1, wherein the handover information further comprises at least one of:
an absolute time for executing the handover or for accessing the target cell;
a condition to be fulfilled before execution of the handover; and
at least one physical random access channel resource.

3. The method of any one of Claims 1 to 2, wherein at least a portion of the handover information is received in a handover command

4. The method of Claim 3, wherein at least a portion of the handover command is received one of: in a broadcast, and wherein the broadcast indicates a group of wireless devices to which the handover command applies, and via dedicated signaling.

5. The method of any one of Claims 1 to 4, wherein the handover information indicates to trigger a random access to a target cell according to the time offset.

6. The method of any one of Claims 1 to 5, wherein the handover : comprises:
a dual active protocol stack, DAPS, handover;
a conditional handover, CHO; or
a Random Access Channel-less, RACH-less, handover.

7. A method (1300) performed by a network node (160), the method comprising:
transmitting (1302), to a wireless device (110), handover information to facilitate an execution of a handover of the wireless device from a source cell to a target cell, wherein at least one of the network node or the target cell is associated with a non-terrestrial network, NTN, network node and the handover information comprises at least one of:
a randomised time offset;
information for generating a randomised time offset;
information associated with ephemeris data of a satellite serving the target cell;
a time associated with an upcoming service or feeder link switch;
an indication of whether an upcoming link switch is a service link switch or a feeder link switch;
information associated with a timing advance;
an indication to execute a previously received preconfigured handover command;
an identifier associated with a previously received preconfigured handover command;
an indication for disabling fallback to a source cell; and
at least one parameter for determining a quality of the source cell for fallback to the source cell.

8. The method of claim 7, wherein the handover information further comprises at least one of:
an absolute time for executing the handover or for accessing the target cell;
a condition to be fulfilled before execution of the handover; and
at least one physical random access channel resource.

9. The method of any one of Claims 7 to 8, wherein at least a portion of the handover information is transmitted in a handover command.

10. The method of Claim 9, wherein at least a portion of the handover command is one of: transmitted in a broadcast, wherein the broadcast indicates a group of wireless devices to which the handover command applies, and sent via dedicated signaling.

11. The method of any one of Claims 7 to 10, wherein the handover information indicates to trigger a random access to the target cell according to the time offset.

12. The method of any one of Claims 7 to 11, wherein the handover comprises:
a dual active protocol stack, DAPS, handover;
a conditional handover, CHO; or
a Random Access Channel-less, RACH-less, handover.

13. The method of any one of Claims 7 to 12, wherein the network node is associated with a non-terrestrial network.

14. A wireless device (110) adapted to perform the method according to any of claims 1 to 6.

15. A network node (160) adapted to perform the method according to any of claims 7 to 13.

## Patentansprüche

1. Verfahren (1200), das von einem drahtlosen Gerät (110) durchgeführt wird, wobei das Verfahren aufweist:
Empfangen (1202) von Übergabeinformationen von einem Netzwerkknoten (160), die der Ausführung einer Übergabe des drahtlosen Geräts zu einer Zielzelle zugeordnet sind, wobei mindestens eines des Netzwerkknotens oder der Zielzelle einem Netzwerkknoten eines nicht-terrestrischen Netzwerks, NTN, zugeordnet ist, und die Übergabeinformationen mindestens eines der folgenden Elemente aufweisen:
einen zufälligen Zeitversatz;
Informationen zum Erzeugen eines zufälligen Zeitversatzes;
Informationen, die Ephemeridendaten eines Satelliten zugeordnet sind, der die Zielzelle bedient;
eine Zeit, die einem bevorstehenden Dienst- oder Feeder-Verbindungswechsel zugeordnet ist;
eine Angabe, ob ein bevorstehender Verbindungswechsel ein Dienstverbindungswechsel oder ein Feeder-Verbindungswechsel ist;
Informationen im Zusammenhang mit einer Zeitvorverlegung;
eine Angabe zur Ausführung eines zuvor empfangenen vorkonfigurierten Übergabebefehls;
eine Kennung, die einem zuvor empfangenen vorkonfigurierten Übergabebefehl zugeordnet ist;
eine Angabe zur Deaktivierung eines Fallbacks auf eine Quellzelle; und
mindestens einen Parameter zum Bestimmen einer Qualität der Quellzelle für einen Fallback auf die Quellzelle; und
Durchführen mindestens eines Vorgangs der Übergabe auf der Grundlage der Übergabeinformationen.

2. Verfahren nach Anspruch 1, wobei die Übergabeinformationen zudem mindestens eines der folgenden Elemente aufweisen:
eine absolute Zeit für die Ausführung der Übergabe oder für einen Zugriff auf die Zielzelle;
eine Bedingung, die vor der Ausführung der Übergabe erfüllt sein muss; und
mindestens eine physikalische Random-Access-Channel-Ressource.

3. Verfahren nach einem der Ansprüche 1 bis 2, wobei mindestens ein Teil der Übergabeinformationen in einem Übergabebefehl empfangen wird.

4. Verfahren nach Anspruch 3, wobei mindestens ein Teil des Übergabebefehls auf eine der folgenden Arten empfangen wird: in einer Rundsendung, wobei die Rundsendung eine Gruppe von drahtlosen Geräten angibt, für die der Übergabebefehl gilt, oder über eine dedizierte Signalisierung.

5. Verfahren nach einem der Ansprüche 1 bis 4, wobei die Übergabeinformationen anzeigen, dass ein Zufallszugriff auf eine Zielzelle entsprechend dem Zeitversatz ausgelöst werden soll.

6. Verfahren nach einem der Ansprüche 1 bis 5, wobei die Übergabe aufweist:
einen Dual-Active-Protocol-Stack-, DAPS, Handover;
eine bedingte Übergabe, CHO; oder
einen Random-Access-Channel-losen, RACH-less, Handover.

7. Verfahren (1300), das von einem Netzwerkknoten (160) durchgeführt wird, wobei das Verfahren aufweist:
Senden (1302) von Übergabeinformationen an ein drahtloses Gerät (110), um die Ausführung einer Übergabe des drahtlosen Geräts von einer Quellzelle zu einer Zielzelle zu erleichtern, wobei mindestens eines des Netzwerk-Knotens oder der Zielzelle einem Netzwerkknoten eines nicht-terrestrischen Netzwerks, NTN, zugeordnet ist und die Übergabeinformationen mindestens eines der folgenden Elemente aufweisen:
einen zufälligen Zeitversatz;
Informationen zum Erzeugen eines zufälligen Zeitversatzes;
Informationen, die Ephemeridendaten eines Satelliten zugeordnet sind, der die Zielzelle bedient;
eine Zeit, die einem bevorstehenden Dienst- oder Feeder-Verbindungswechsel zugeordnet ist;
eine Angabe, ob ein bevorstehender Verbindungswechsel ein Dienstverbindungswechsel oder ein Feeder-Verbindungswechsel ist;
Informationen im Zusammenhang mit einer Zeitvorverlegung;
eine Angabe zur Ausführung eines zuvor empfangenen vorkonfigurierten Übergabebefehls ;
eine Kennung, die einem zuvor empfangenen vorkonfigurierten Übergabebefehl zugeordnet ist;
eine Angabe zur Deaktivierung eines Fallbacks auf eine Quellzelle; und
mindestens einen Parameter zum Bestimmen einer Qualität der Quellzelle für einen Fallback auf die Quellzelle.

8. Verfahren nach Anspruch 7, wobei die Übergabeinformationen zudem mindestens eines der folgenden Elemente aufweisen:
eine absolute Zeit für die Ausführung der Übergabe oder für einen Zugriff auf die Zielzelle;
eine Bedingung, die vor der Ausführung der Übergabe erfüllt sein muss; und
mindestens eine physikalische Random-Access-Channel-Ressource.

9. Verfahren nach einem der Ansprüche 7 bis 8, wobei mindestens ein Teil der Übergabeinformationen in einem Übergabebefehl übertragen wird.

10. Verfahren nach Anspruch 9, wobei mindestens ein Teil des Übergabebefehls auf eine der folgenden Arten empfangen wird: in einer Rundsendung, wobei die Rundsendung eine Gruppe von drahtlosen Geräten angibt, für die der Übergabebefehl gilt, oder über eine dedizierte Signalisierung gesendet wird.

11. Verfahren nach einem der Ansprüche 7 bis 10, wobei die Übergabeinformationen anzeigen, dass ein Zufallszugriff auf eine Zielzelle entsprechend dem Zeitversatz ausgelöst werden soll.

12. Verfahren nach einem der Ansprüche 7 bis 11, wobei die Übergabe aufweist:
einen Dual-Active-Protocol-Stack-, DAPS, Handover;
eine bedingte Übergabe, CHO; oder
einen Random-Access-Channel-losen, RACH-less, Handover.

13. Verfahren nach einem der Ansprüche 7 bis 12, wobei der Netzwerkknoten einem nicht-terrestrischen Netzwerk zugeordnet ist.

14. Drahtloses Gerät (110), das zur Durchführung des Verfahrens gemäß einem der Ansprüche 1 bis 6 ausgebildet ist.

15. Netzwerkknoten (160), der zur Durchführung des Verfahrens gemäß einem der Ansprüche 7 bis 13 ausgebildet ist.

## Revendications

1. Procédé (1200) mis en œuvre par un dispositif sans fil (110), le procédé comprenant :
la réception (1202), à partir d'un noeud de réseau (160), d'informations de transfert associées à l'exécution d'un transfert du dispositif sans fil vers une cellule cible, dans lequel au moins l'un parmi le noeud de réseau et la cellule cible est associé à un nœud de réseau d'un réseau non terrestre, NTN, et les informations de transfert comprennent au moins l'un parmi :
un décalage temporel aléatoire ;
des informations pour générer un décalage temporel aléatoire ;
des informations associées aux données d'éphémérides d'un satellite desservant la cellule cible ;
un temps associé à un prochain changement de service ou de liaison d'alimentation ;
une indication précisant si un changement de liaison à venir est un changement de liaison de service ou un changement de liaison d'alimentation ;
des informations associées à une avance de synchronisation ;
une indication d'exécution d'une commande de transfert préconfigurée reçue précédemment ;
un identifiant associé à une commande de transfert préconfigurée reçue précédemment ;
une indication pour désactiver un repli vers une cellule source ; et
au moins un paramètre pour déterminer une qualité de la cellule source pour un repli vers la cellule source ; et
effectuer au moins une opération du transfert sur la base des informations de transfert.

2. Procédé selon la revendication 1, dans lequel les informations de transfert comprennent en outre au moins l'un des éléments suivants :
un temps absolu pour exécuter le transfert ou pour accéder à la cellule cible ;
une condition à remplir avant l'exécution du transfert ; et
au moins une ressource de canal d'accès aléatoire physique.

3. Procédé selon l'une quelconque des revendications 1 à 2, dans lequel au moins une partie des informations de transfert est reçue dans une commande de transfert.

4. Procédé selon la revendication 3, dans lequel au moins une partie de la commande de transfert est reçue : dans une diffusion, et dans lequel la diffusion indique un groupe de dispositifs sans fil auxquels s'applique la commande de transfert, ou via une signalisation dédiée.

5. Procédé selon l'une quelconque des revendications 1 à 4, dans lequel les informations de transfert indiquent de déclencher un accès aléatoire à une cellule cible en fonction du décalage temporel.

6. Procédé selon l'une quelconque des revendications 1 à 5, dans lequel le transfert comprend :
un transfert de pile de protocoles doublement active, DAPS ;
un transfert conditionnel, CHO ; ou
un transfert sans canal d'accès aléatoire, RACH-less.

7. Procédé (1300) mis en œuvre par un nœud de réseau (160), le procédé comprenant :
la transmission (1302), à un dispositif sans fil (110), d'informations de transfert pour faciliter une exécution d'un transfert du dispositif sans fil d'une cellule source à une cellule cible, dans lequel au moins l'un parmi le nœud de réseau ou la cellule cible est associé à un nœud de réseau d'un réseau non terrestre, NTN, et les informations de transfert comprennent au moins l'un parmi :
un décalage temporel aléatoire ;
des informations permettant de générer un décalage temporel aléatoire ;
des informations associées aux données d'éphémérides d'un satellite desservant la cellule cible ;
un temps associé à un prochain changement de service ou de liaison d'alimentation ;
une indication précisant si un changement de liaison à venir est un changement de liaison de service ou un changement de liaison d'alimentation ;
des informations associées à une avance de synchronisation ;
une indication d'exécution d'une commande de transfert préconfigurée reçue précédemment ;
un identifiant associé à une commande de transfert préconfigurée reçue précédemment ;
une indication pour désactiver un repli vers une cellule source ; et
au moins un paramètre pour déterminer une qualité de la cellule source pour un repli vers la cellule source.

8. Procédé selon la revendication 7, dans lequel les informations de transfert comprennent en outre au moins l'un des éléments suivants :
un temps absolu pour exécuter le transfert ou pour accéder à la cellule cible ;
une condition à remplir avant l'exécution du transfert ; et
au moins une ressource de canal d'accès aléatoire physique.

9. Procédé selon l'une quelconque des revendications 7 à 8, dans lequel au moins une partie des informations de transfert est transmise dans une commande de transfert.

10. Procédé selon la revendication 9, dans lequel au moins une partie de la commande de transfert est l'une des suivantes : transmise dans une diffusion, dans lequel la diffusion indique un groupe de dispositifs sans fil auxquels la commande de transfert s'applique, et envoyée via une signalisation dédiée.

11. Procédé selon l'une quelconque des revendications 7 à 10, dans lequel les informations de transfert indiquent de déclencher un accès aléatoire à la cellule cible en fonction du décalage temporel.

12. Procédé selon l'une quelconque des revendications 7 à 11, dans lequel le transfert comprend :
un transfert de pile de protocoles doublement active, DAPS ;
un transfert conditionnel, CHO ; ou
un transfert sans canal d'accès aléatoire, RACH-less.

13. Procédé selon l'une quelconque des revendications 7 à 12, dans lequel le nœud de réseau est associé à un réseau non terrestre.

14. Dispositif sans fil (110) adapté pour mettre en œuvre le procédé selon l'une quelconque des revendications 1 à 6.

15. Nœud de réseau (160) adapté pour mettre en œuvre le procédé selon l'une quelconque des revendications 7 à 13.
